# EUROPEAN PATENT SPECIFICATION

(11) **EP 2 770 603 B1**
(45) Date of publication and mention of the grant of the patent: **21.11.2018**
(21) Application number: 12841473.7
(22) Date of filing: 07.09.2012
(51) Int. Cl.: H02J 7/00, B26B 19/38, H01M 10/44, H01M 10/46

(54) **STRUCTURE FOR HOLDING ELECTRIC SHAVER ON CHARGER**
STRUKTUR ZUM HALTEN EINES ELEKTRORASIERERS AUF EINEM LADEGERÄT
STRUCTURE PERMETTANT DE MAINTENIR UN RASOIR ÉLECTRIQUE SUR UN CHARGEUR

(30) Priority: 21.10.2011 JP 2011231533
(43) Date of publication of application: 27.08.2014
(73) Proprietor: Panasonic Corporation, Osaka 571-8501 (JP)
(72) Inventor: SHIGETA, Hiroshi, Osaka 540-6207 (JP); TAKAOKA, Yoichi, Osaka 540-6207 (JP); MATSUOKA, Yasuhide, Osaka 540-6207 (JP); YAMASAKI, Masanobu, Osaka 540-6207 (JP)
(74) Representative: Grünecker Patent- und Rechtsanwälte PartG mbB
(86) International application number: PCT/JP2012/005679
(87) International publication number: WO 2013/057871

(56) References cited:
- EP-A2- 1 878 545
- DE-U1- 29 721 015
- JP-A- S57 145 684
- JP-A- 2006 522 625
- JP-A- 2009 177 897
- JP-A- 2009 238 055
- US-A- 3 659 180

## Description

### [Technical Field]

The present invention relates to a holding structure for an electric razor and a charger.

### [Background Art]

Techniques to stably attach and hold an electric razor on a charger have been proposed. For example, Patent Literature 1 discloses a mechanical holding mechanism in which the electric razor is pulled by a movable holding arm provided for a cleaner charger to be held by the cleaner charger. Patent Literature 2 discloses a magnet holding mechanism utilizing magnetic attracting force to hold an electric razor on a cleaner charger.

### [Citation List]

### [Patent Literature]

[PTL 1] Japanese Patent Laid-open Publication No. 2004-261208
[PTL 2] Japanese Patent Laid-open Publication No. 2008-18128

### [Summary of Invention]

### [Technical Problem]

However, according to the conventional techniques, to electrically connect an electric razor and a charger, attracting force of magnets, any mechanism, or the like is required. Moreover, resin molded portions are used for positioning or holding of the electric razor and charger, and repeated attachment and detachment could damage the resin molded parts.

Accordingly, an object of the present invention is to provide a simple holding structure for an electric razor and a charger which is capable of stably holding the electric razor.

### [Solution to Problem]

The present invention relates to a holding structure for an electric razor and a charger which allows the electric razor to be mounted thereon and performs at least charge of the electric razor, the holding structure including: a conducting terminal protruded from a body of the electric razor; and a guide portion which is provided for a contact portion of the charger and is configured to guide the conducting terminal to a fixed position. The contact portion is energized by an elastic member.

Moreover, in the present invention, the conducting terminal may be provided at each of symmetric positions on both side faces of the electric razor, and the guide portion may guide the electric razor in the front-back direction.

Furthermore, in the present invention, the contact portion may include a conducting member and a non-conducting member, and the guide portion may be composed of the non-conducting member.

Still furthermore, in the present invention, the guide portion may have a substantially V-shaped form open at the top.

Still furthermore, in the present invention, the substantially V-shaped form of the guide portion may be configured such that an angle on the front side is smaller than an angle on the back side.

### [Advantageous Effects of Invention]

According to the present invention, it is possible to provide a simple holding structure for an electric razor and a charger which is capable of stably holding the electric razor.

### [Brief Description of Drawings]

FIG. 1 is a front view illustrating an electric razor according to an embodiment of the present invention.
FIG. 2 is a side view illustrating the electric razor according to the embodiment of the present invention.
FIG. 3 is a back view illustrating the electric razor according to the embodiment of the present invention.
FIG. 4 is a central cross-sectional view illustrating the electric razor according to the embodiment of the present invention.
FIG. 5 is an exploded perspective view illustrating the electric razor according to the embodiment of the present invention.
FIG. 6 is a front view illustrating the electric razor according to the embodiment of the present invention which is mounted on a charger.
FIG. 7 is a front view illustrating the charger according to the embodiment of the present invention.
FIG. 8 is a side view illustrating the charger according to the embodiment of the present invention.
FIG. 9 is a central cross-sectional view illustrating the charger according to the embodiment of the present invention.
FIG. 10 is an exploded perspective view illustrating the charger according to the embodiment of the present invention.
Figs. 11(A) and 11(B) are enlarged views of a contact portion of the charger according to the embodiment of the present invention, FIG. 11(A) being a perspective view of the contact portion as seen from the electric razor side, FIG. 11(B) being a perspective view of the contact portion as seen from the body case side.

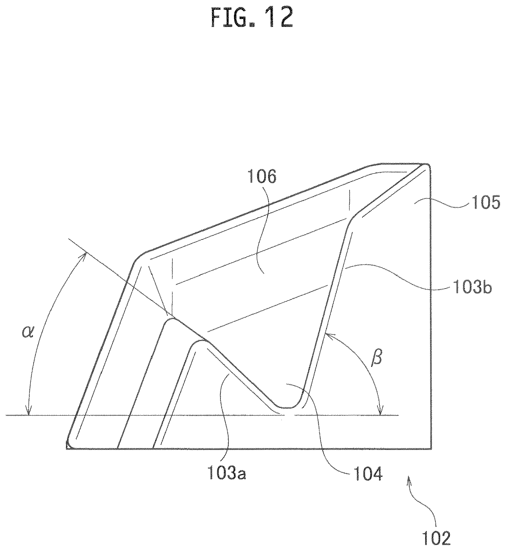

FIG. 12 is an enlarged view of the contact portion of the charger according to the embodiment of the present invention.

### [Description of Embodiments]

Hereinafter, a description is given in detail of an embodiment of the present invention with reference to the drawings. In the following description, the direction that plural outer blades are arranged side by side is referred to as a front-back direction X, the direction that each outer blade extends is referred to as a right-left direction Y, and the vertical direction when a head portion is positioned with the outer blades facing upward is referred to as a vertical direction Z. Moreover, the side of the electric razor where a switch portion is provided is referred to as a front side in the front-back direction X.

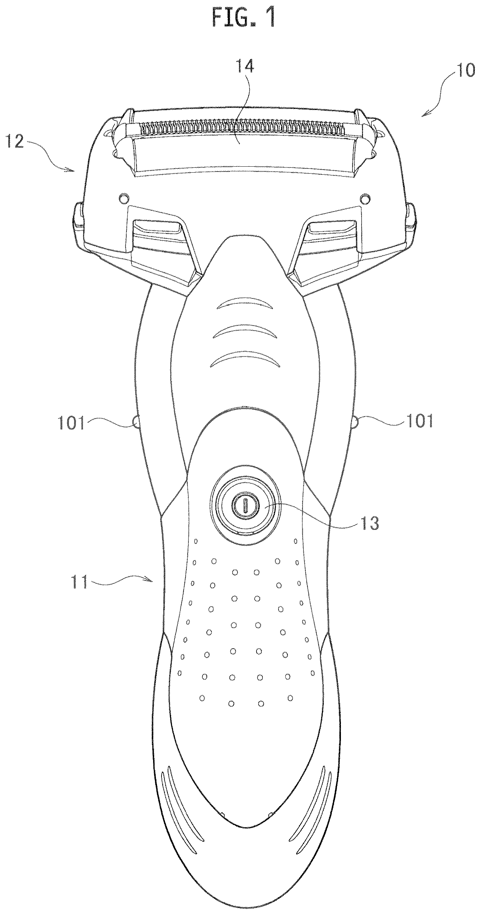

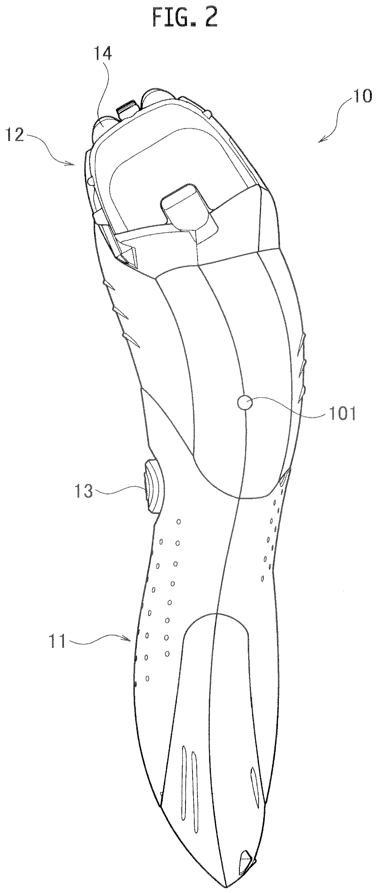

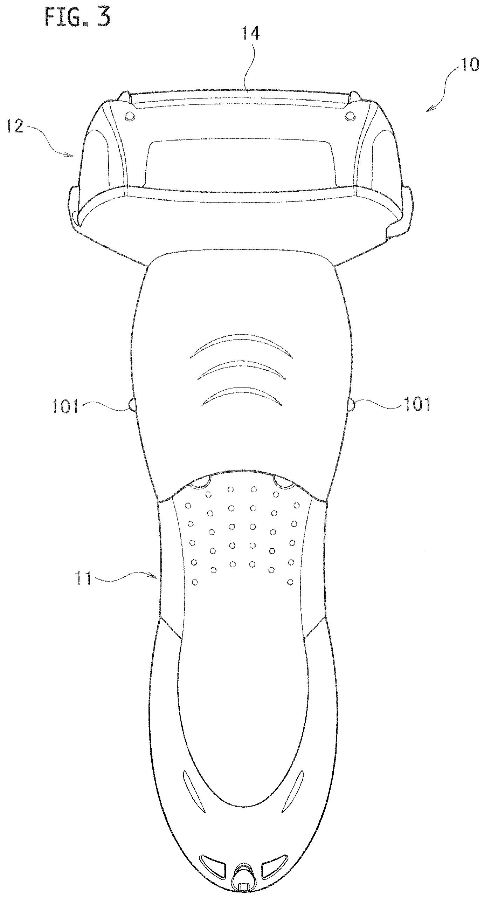

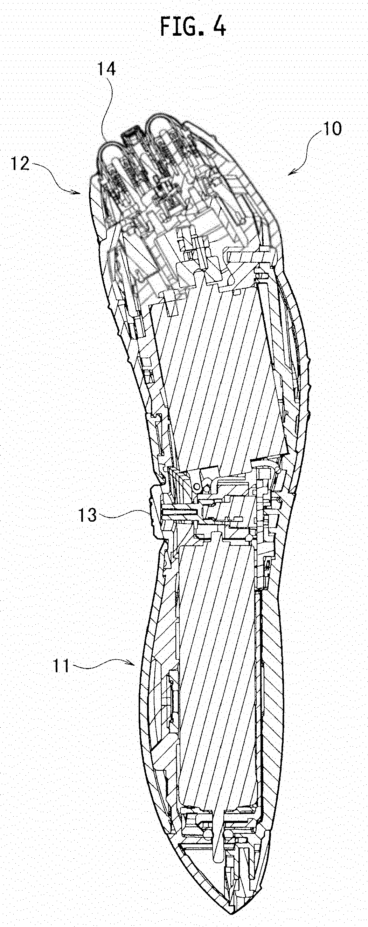

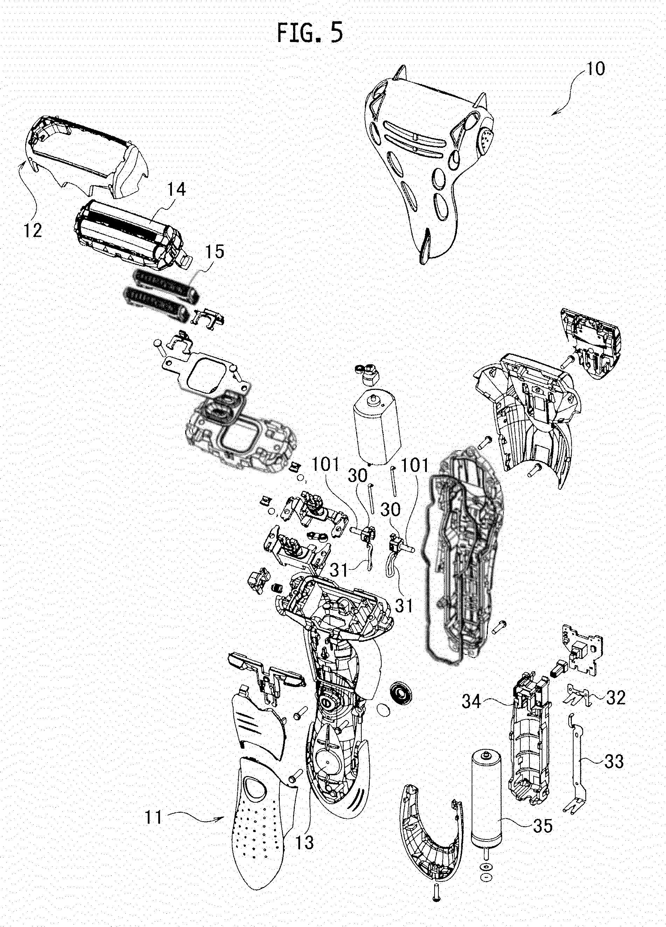

First, the configuration of an electric razor 10 according to the embodiment is described with reference to FIGS . 1 to 5. FIG. 1 is a front view of the electric razor 10; FIG. 2, a side view of the electric razor 10; FIG. 3, a back view of the electric razor 10; FIG. 4, a central cross-sectional view of the electric razor 10; and FIG. 5, an exploded perspective view of the electric razor 10.

As illustrated in the aforementioned drawings, the electric razor 10 includes a body (a grip portion) 11 gripped by a hand and a head portion 12 supported by the body 11. The body 11 is provided with a switch portion 13 which turns on and off a not-shown rotary motor. Inner blades 15 provided inside outer blades 14 exposed above the head portion 12 are moved relatively to the outer blades 14 (reciprocate in the right-left direction Y), so that body hair inserted into blade holes of the outer blades 14 are cut in cooperation of the outer and inner blades 14 and 15. A pair of conducting terminals 101 are protruded from symmetric positions on both side faces of the body 11. The conducting terminals 101 are electrically connected to contact portions of a later-described charger for charging the electric razor 10.

As illustrated in FIG. 5, the conducting terminals 101 are connected to leads 31 through charge plugs 30, and the leads 31 are connected to a rechargeable battery 35 within a battery base 34 through a battery negative electrode bracket 32 and a battery positive electrode bracket 33. When the conducting terminals 101 are electrically connected to the contact portions of the charger, the rechargeable battery 35 can be charged with electric power supplied from the charger.

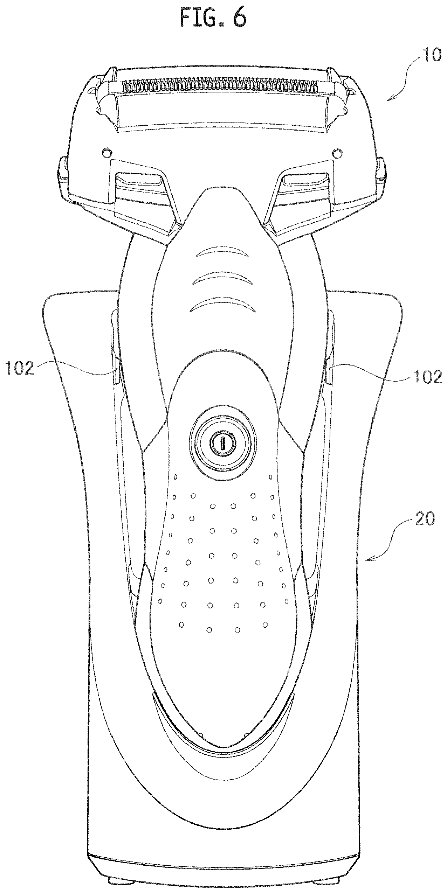

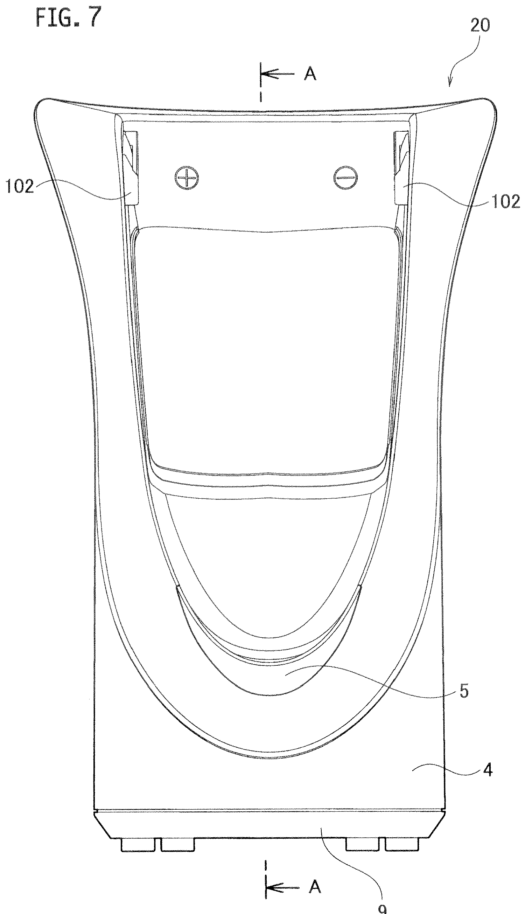

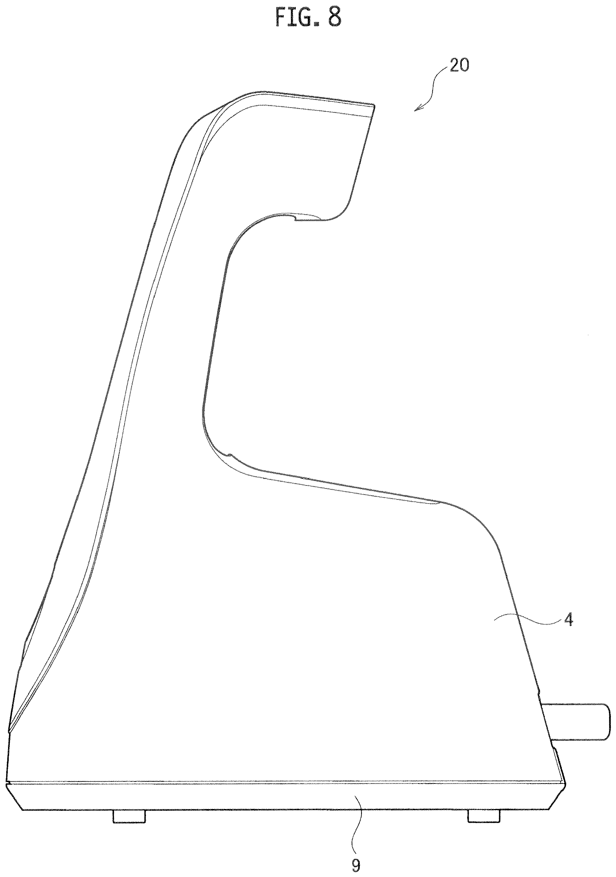

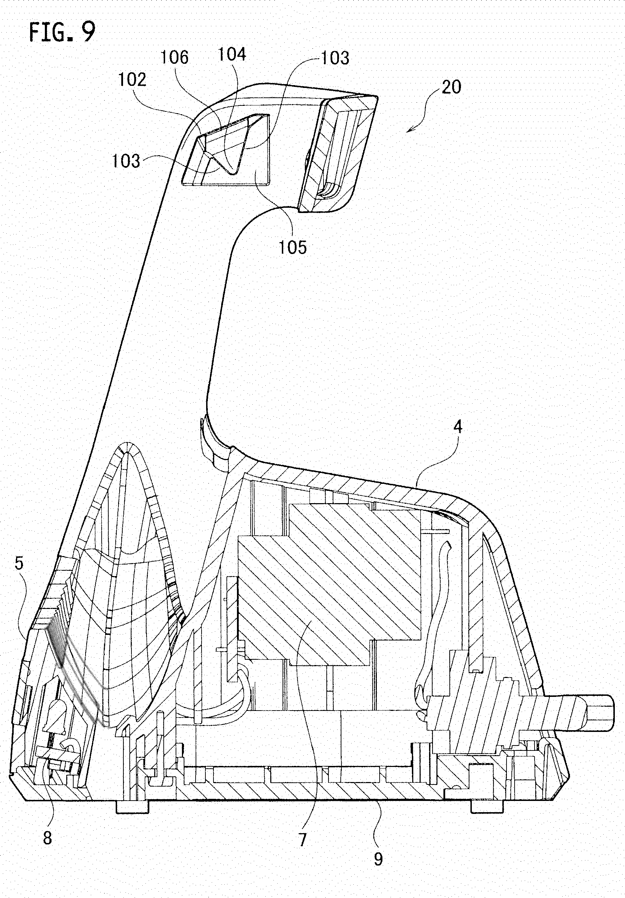

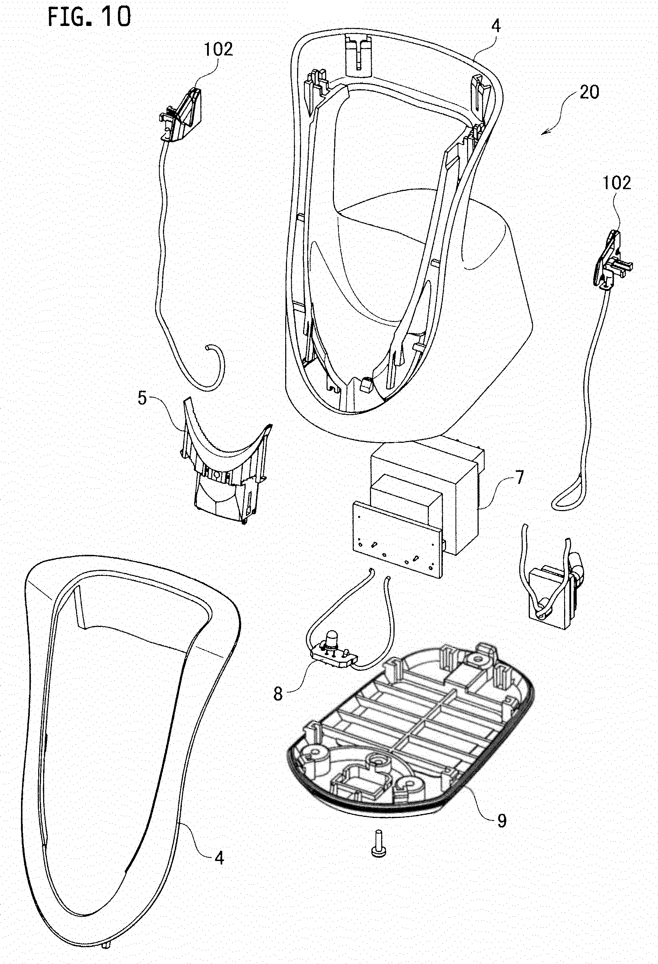

Next, the configuration of a charger 20 is described with reference to FIGS. 6 to 10. FIG. 6 is a front view of the electric razor 10 mounted on the charger 20; FIG. 7, a front view of the charger 20; FIG. 8, a side view of the charger 20; FIG. 9, a central cross-sectional view of the charger 20; and FIG. 10, an exploded perspective view of the charger 20.

The top and front of the body case 4 of the charger 20 are opened, so that the electric razor 10 can be easily put into the charger 20 from above and diagonally from the front. When the electric razor 10 is put in the charger 20 with the head portion 12 upward, the electric razor 10 is inserted toward the bottom of the charger 20 by the own weight thereof. As the electric razor 10 is inserted into the charge 20, the conducting terminals 101 of the electric razor 10 are guided by guide portions 103 of the charger 20 and settle to predetermined positions of the contact portions 102 of the charger 20. The contact portions 102 of the charger 20 are elastically energized and sandwich the conducting terminals 101 of the electric razor 10 between both sides.

In the exploded perspective view of FIG. 10, a body case 4 of the charger 20 is divided in the vertical direction, and the body case 4 and a bottom case 9 are separated. Between the body case 4 and bottom case 9 is housed a transformer 7 transforming the voltage of the power supply. The body case 4 is provided with an LED circuit 8 that controls drive of an LED and an LED cover 5 that guides light of the LED. When the electric razor 10 is mounted on the charger 20 and the conducting terminals 101 of the electric razor 10 are electrically connected to the respective contact portions 102 of the charger 20, the LED lights up, enabling the user recognize that the electric razor 10 is being charged.

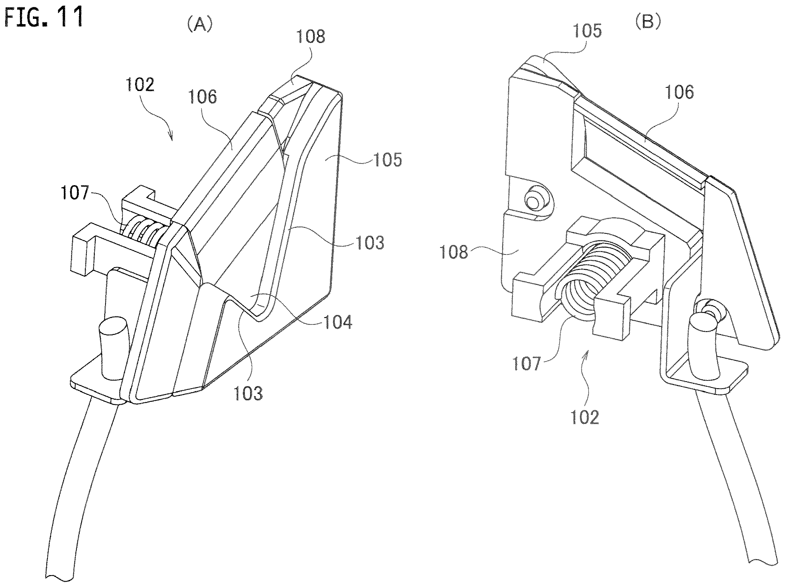

FIGS. 11(A) and 11(B) are enlarged views of one of the contact portions 102 of the charger 20, FIG. 11(A) being a perspective view of the contact portion 102 as seen from the electric razor 10 side, FIG. 11(B) being a perspective view of the same as seen from the body case 4 side. The contact portion 102 includes: a connection bracket 106 as a conducting portion made of metal; a contact damper 108 ensuring contact pressure with reaction force of a spring 107; and a contact cover 105 as a non-conducting member. As illustrated in the drawing, the guide portion 103 guiding the corresponding conducting terminal 101 to a fixed position 104 is provided for the contact portion 102, and the contact portion 102 is energized by the spring 107. The fixed position 104 is a position where the conducting terminal 101 is guided to finally settle (the lower end). Herein, the center of the diameter of the coil spring 107 corresponds to the fixed position 104. With this configuration, proper contact pressure can be applied to the conducting terminal 101 and contact portion 102 by the reaction force of the spring 107. The guide portion 103 is protruded inward from the fixed position 104, but the amount of protrusion thereof varies with the spring 107. In other words, the contact portion 102 is configured to move in the right-left direction Y so as to provide proper contact pressure.

With such a configuration, the conducting terminal 101 itself of the electric razor 10 can be guided to the fixed position 104 by only the shape of the contact portion 102 of the charger 20. Accordingly, the conducting portion 101 can be stably brought into contact with the predetermined position of the contact portion 102. Moreover, it is possible to prevent the conducting terminal 101 from being detached because of oscillation or the like after the electric razor 10 is mounted on the charger 20.

When the electric razor 10 is mounted on the charger 20, the mounting position of the electric razor 10 in the right-left direction Y is determined by the distance between the contact portions 102, and the mounting position of the electric razor 10 in the vertical direction Z is determined by the own weight of the electric razor 10. The guide portions 103 are, therefore, configured to guide the electric razor 10 in the front-back direction X. The positions of the electric razor 10 in the directions X, Y, and Z are thus determined, so that the conducting terminals 101 can be stably brought into contact with the respective fixed positions 104 of the contact portions 102.

Whether the bottom point of support of the electric razor 10 is brought into contact with the charger 20 is not particularly limited. Specifically, when the conducting terminals 101 of the electric razor 10 are located on the fixed positions 104, the bottom point of support of the electric razor 10 may be floated or may be in contact with a member of the charger 20.

Each contact portion 102 includes conducting and non-conducting members, and the guide portion 103 thereof is composed of a non-conducting member. In such a configuration that each guide portion 103 is made of a non-conducting material, the contact portions 102 and respective conducting terminals 101 do not have electrical continuity therebetween when the positions of the conducting terminals 101 do not correspond to the corresponding fixed positions 104 in the front-back direction. In other words, when the conducting terminals 101 are not attached to the corresponding fixed positions 104, proper contact pressure cannot be applied to the conducting terminals 101 of the electric razor 10 and the contact portion 102 of the charger 20. In such a case, it is preferable to enable the user to recognize that the conducting terminals 101 are attached to abnormal positions. Since each guide portion 103 is composed of a non-conducting member, the contact portions 102 do not have electrical continuity with the corresponding conducting terminals 101 when the conducting terminals 101 are not attached to the corresponding fixed positions 104, so that the LED cannot light up. The user, therefore, can recognize that the conducting terminals 101 are attached to abnormal positions.

Each guide portion 103 is made of a mold material so as to have a substantially V-shaped form open at the top. Because of the substantially V-shaped form, the conducting terminals 101 can be more stably guided. In the substantially V-shaped form of the guide portions 103, it is preferable that an angle α on the front side be smaller than an angle β on the back side. The angle α on the front side is an angle between the horizontal direction and a guide direction of a front guide portion 103a. The angle *β* on the back side is an angle between the horizontal direction and a guide direction of a back guide portion 103b. By setting the angle α on the front side smaller, the usability can be improved, that is, the electric razor 10 can be more easily mounted diagonally from the front side to the charger 20. Moreover, the electric razor 10 can be more easily removed from the charger 20 diagonally forward.

As described above, in the embodiment, the conducting terminals 101 are protruded from the body 11 of the electric razor 10, and the guide portions 103 guiding the conducting terminals 101 to the fixed positions 104 are provided for the contact portions 102 of the charger 20. The contact portions 102 are energized by the springs 107. It is, therefore, possible to provide a simple holding structure for the electric razor 10 and the charger 20 which is capable of stably holding the electric razor 10. This makes the mechanism requiring attracting force, such as a magnet unnecessary, thus reducing the number of parts. Moreover, the charger 20 holds the metallic terminals of the electric razor 10. Accordingly, it is possible to prevent damage to resin molded portions.

Moreover, the conducting terminals 101 are provided at symmetric positions on both side faces of the electric razor 10, and the guide portions 103 are configured to guide the electric razor 10 in the front-back direction. This allows the conducting terminals 101 to be more stably brought into contact with the fixed positions 104 of the contact portions 102.

Furthermore, each contact portion 102 includes conducting and non-conducting members, and the guide portion 103 is composed of the non-conducting member. Since each guide portion 103 is made of a non-conducting material as described above, the conducting terminals 101 do not have electrical continuity with the corresponding contact portions 102 if the positions of the conducting terminals 101 are not coincident with the fixed positions 104 in the front-back direction, so that the LED does not light up. Accordingly, the user can recognize that the conducting portions 101 are attached to abnormal positions. Moreover, the guide portions 103 composed of a non-conducting member improves flexibility in setting a shape.

The guide portion 103 has a substantial V-shaped form open at the top. By having such a substantially V-shaped form, the guide portion 103 can guide the conducting terminals 101 more stably.

Moreover, the substantial V-shaped form of the guide portion 103 has an angle on the front side smaller than the angle on the back side. By setting the angle on the front side smaller in such a manner, the usability can be increased.

The preferred embodiment of the present invention is described hereinabove. However, the present invention is not limited to the embodiment and can be variously modified. For example, while the conducting terminals 101 are provided at the symmetric positions on both side faces of the electric razor 10 in this embodiment, the positions of the conducting terminals 101 are not limited to the aforementioned positions. The positions of the contact portions 102 of the charger 20 can be properly changed to correspond to the positions of the conducting terminals 101. The detailed specifications (the shape, size, layout, and the like) of the contact portions 102 can also be properly changed. It is certain that the charger 20 may further include another function in addition to the charging function, such as a function of cleaning the head portion 12 of the electric razor 10.

### [Industrial Applicability]

According to the present invention, it is possible to provide a simple holding structure for an electric razor and a charger which is capable of stably holding the electric razor.

## Claims

1. A holding structure for an electric razor (10) and a charger (20) comprising :
an electric razor (10) comprising
a conducting terminal (101) protruding from the body (11) of the electric razor (10), and
a charger (20) which allows the electric razor (10) to be mounted thereon and performs at least charge of the electric razor (10),
and comprising a guide portion (103) which is provided with a contact portion (102) of the charger (20) and is configured to guide the conducting terminal (101) to a fixed position, wherein
the contact portion (102) is energized by an elastic member (107).

2. The holding structure for an electric razor (10) and a charger (20) according to claim 1, wherein the conducting terminal (101) is provided at each of symmetric positions on both side faces of the electric razor (10), and the guide portion (103) guides the electric razor (10) in the front-back direction (X).

3. The holding structure for an electric razor (10) and a charger (20) according to claim 1 or 2, wherein the contact portion (102) includes a conducting member and non-conducting member, and the guide portion (103) is composed of the non-conducting member.

4. The holding structure for an electric razor (10) and a charger (20) according to any one of claims 1 to 3, wherein the guide portion (103) has a substantially V-shaped form open at the top.

5. The holding structure for an electric razor (10) and a charger (20) according to claim 4, wherein in the substantially V - shaped form of the guide portion (103), an angle on the front side is smaller than an angle (β) on the back side.

## Patentansprüche

1. Haltestruktur für einen Elektrorasierer (10) und ein Ladegerät (20), die umfasst:
einen Elektrorasierer (10), der einen leitenden Anschluss (101) umfasst, der von dem Körper (11) des Elektrorasierers (10) vorsteht; sowie
ein Ladegerät (20), an dem der Elektrorasierer (10) angebracht werden kann, und das wenigstens Laden des Elektrorasierers (10) durchführt,
und wobei sie umfasst:
einen Führungs-Abschnitt (103), der mit einem Kontakt-Abschnitt (102) des Ladegeräts (20) versehen ist und zum Führen des leitenden Anschlusses (101) an eine stationäre Position eingerichtet ist, wobei
der Kontakt-Abschnitt (102) durch ein elastisches Element (107) gespannt wird.

2. Haltestruktur für einen Elektrorasierer (10) und ein Ladegerät (20) nach Anspruch 1, wobei der leitende Anschluss (101) an jeder von symmetrischen Positionen an beiden Seitenflächen des Elektrorasierers (10) vorhanden ist und der Führungs-Abschnitt (103) den Elektrorasierer (10) in der Längsrichtung (X) führt.

3. Haltestruktur für einen Elektrorasierer (10) und ein Ladegerät (20) nach Anspruch 1 oder 2, wobei der Kontakt-Abschnitt (102) ein leitendes Element sowie ein nichtleitendes Element einschließt und der Führungs-Abschnitt (103) aus dem nichtleitenden Element besteht.

4. Haltestruktur für einen Elektrorasierer (10) und ein Ladegerät (20) nach einem der Ansprüche 1 bis 3, wobei der Führungs-Abschnitt (103) im Wesentlichen V-förmig und an der Oberseite offen ist.

5. Haltestruktur für einen Elektrorasierer (10) und ein Ladegerät (20) nach Anspruch 4, wobei bei dem im Wesentlichen V-förmigen Führungs-Abschnitt (103) ein Winkel an der Vorderseite kleiner ist als ein Winkel (β) an der Rückseite.

## Revendications

1. Structure de maintien pour un rasoir électrique (10) et un chargeur (20), comprenant :
un rasoir électrique (10) comprenant une borne conductrice (101) faisant saillie hors du corps (11) du rasoir électrique (10), et
un chargeur (20) qui autorise le montage du rasoir électrique (10) sur lui et effectue au moins la charge du rasoir électrique (10),
et comprenant :
un organe de guidage (103) qui est doté d'un organe de contact (102) du chargeur (20) et qui est configuré pour guider la borne conductrice (101) vers une position fixe, où
l'organe de contact (102) est sous tension grâce à un élément élastique (107).

2. Structure de maintien pour un rasoir électrique (10) et un chargeur (20) selon la revendication 1, dans laquelle la borne conductrice (101) est prévue à chacune de positions symétriques situées sur les deux faces latérales du rasoir électrique (10), et l'organe de guidage (103) guide le rasoir électrique (10) dans la direction avant - arrière (X).

3. Structure de maintien pour un rasoir électrique (10) et un chargeur (20) selon la revendication 1 ou la revendication 2, dans laquelle l'organe de contact (102) inclut un élément conducteur et un élément non conducteur, et l'organe de guidage (103) est composé de l'élément non conducteur.

4. Structure de maintien pour un rasoir électrique (10) et un chargeur (20) selon l'une quelconque des revendications 1 à 3, dans laquelle l'organe de guidage (103) présente une forme sensiblement en V ouverte au sommet.

5. Structure de maintien pour un rasoir électrique (10) et un chargeur (20) selon la revendication 4, dans laquelle, dans la forme sensiblement en V de l'organe de guidage (103), un angle sur le côté avant est plus petit qu'un angle (β) sur le côté arrière.
